# FASCICULE DE BREVET EUROPEEN

(11) **EP 3 870 928 B1**
(45) Date de publication et mention de la délivrance du brevet: **14.12.2022**
(21) Numéro de dépôt: 19823787.7
(22) Date de dépôt: 08.10.2019
(51) Int. Cl.: F41G 7/22, G02B 27/00, G02B 17/06

(54) **ENSEMBLE OPTIQUE DE COLLECTE DE RAYONNEMENT POUR DISPOSITIF AUTODIRECTEUR DE GUIDAGE D'ENGIN AUTOPROPULSE**
OPTISCHE STRAHLUNGSSAMMELANORDNUNG FÜR EINE ZIELSUCHVORRICHTUNG ZUR LENKUNG EINER RAKETE
OPTICAL RADIATION-COLLECTING ASSEMBLY FOR A HOMING DEVICE FOR GUIDING A ROCKET

(30) Priorité: 23.10.2018 FR 1801130
(43) Date de publication de la demande: 01.09.2021
(73) Titulaire: Safran Electronics & Defense, 75015 Paris (FR)
(72) Inventeur: DAVENEL, Arnaud, 92100 BOULOGNE-BILLANCOURT (FR)
(74) Mandataire: Plasseraud IP
(86) Numéro de dépôt international: PCT/FR2019/052381
(87) Numéro de publication internationale: WO 2020/084217

(56) Documents cités:
- US-A1- 2006 152 705
- US-A1- 2010 127 113
- US-A1- 2010 327 105
- US-A1- 2014 014 765

## Description

### Domaine technique

L'invention concerne un ensemble optique de collecte de rayonnement pour dispositif autodirecteur de guidage d'engin autopropulsé.

### Technique antérieure

Un engin autopropulsé tel qu'un missile est muni d'un dispositif autodirecteur qui guide automatiquement le déplacement autonome de l'engin vers un point de provenance d'un rayonnement. Ce point de provenance peut être une source de rayonnement thermique qui est prise pour cible, ou une tache d'éclairement qui est produite par un faisceau laser de pointage de cible.

Un tel dispositif autodirecteur possède une entrée optique qui est destinée à collecter, lors de son fonctionnement, le rayonnement qui provient de la cible. Mais cette entrée optique est exposée au milieu extérieur pendant le déplacement de l'engin autopropulsé, et possiblement aussi pendant un transport préalable de l'engin par un porteur. Tel est le cas pour un missile destiné à se déplacer à haute vitesse, et possiblement aussi à être transporté préalablement par un avion. Des composants qui sont utiles au fonctionnement du dispositif autodirecteur et qui sont situés à son entrée optique sont alors exposés à un flux d'air et de particules denses à vitesse élevée. Ces particules, telles que des poussières, des grains de sable en suspension dans l'air ou des gouttes de pluie, provoquent une abrasion des composants qui sont situés à l'entrée optique du dispositif autodirecteur, telle que ces composants peuvent devenir inopérants pour leur fonction au sein du dispositif autodirecteur, entraînant des dysfonctionnements ce dernier.

Tel est le cas d'une lentille d'objectif optique qui est utilisée dans un dispositif autodirecteur pour collecter le rayonnement en provenance d'une cible.

Plusieurs méthodes sont alors déjà utilisées pour réduire ou éviter de tels dysfonctionnements.

Une première méthode connue, telle que divulguée dans le document US 2010/0127113, consiste à utiliser un hublot à haute résistance à l'abrasion et haute résistance thermique, par exemple un hublot de saphir, devant l'entrée optique du dispositif autodirecteur. Mais un tel hublot n'est en général pas transparent pour du rayonnement thermique de longueur d'onde d'environ 10 µm (micromètre). Cette première méthode n'est donc pas compatible avec certaines applications de dispositifs autodirecteurs.

D'autres méthodes consistent à protéger l'entrée optique du dispositif autodirecteur pendant son transport par l'avion porteur. Certaines de ces autres méthodes consistent notamment à utiliser une coiffe éjectable ou un coffrage pour le dispositif autodirecteur pendant le transport par l'avion porteur, puis à retirer cette coiffe ou coffrage juste avant l'entrée en fonctionnement du dispositif autodirecteur. Mais de telles méthodes sont onéreuses et augmentent la masse totale qui est transportée par l'avion porteur. En outre, elles n'améliorent pas un résultat d'imagerie qui est obtenu par le système optique du dispositif autodirecteur lorsqu'il est soumis au flux d'air et de particules à vitesse élevée.

### Problème technique

A partir de cette situation, un but de la présente invention est de garantir un bon fonctionnement d'un dispositif autodirecteur dont l'entrée optique est exposée à un flux d'air et de particules à vitesse élevée, sans les inconvénients des méthodes antérieures qui viennent d'être rappelées.

### Résumé de l'invention

Pour atteindre ce but ou un autre, un premier aspect de l'invention propose un nouvel ensemble optique de collecte de rayonnement, qui est adapté pour former l'entrée optique d'un dispositif autodirecteur de guidage d'engin autopropulsé. Cet ensemble optique de collecte comprend selon l'invention :
- un miroir convexe, qui possède une face réfléchissante et un axe optique ;
- un miroir concave, qui est disposé en avant de la face réfléchissante du miroir convexe et tourné vers celui-ci, le miroir concave étant pourvu d'une ouverture à travers sa partie centrale, les miroirs concave et convexe ayant le même axe optique, et cet axe optique traversant l'ouverture du miroir concave en un point central de celle-ci ; et
- au moins un hublot qui est transparent pour le rayonnement, et qui s'étend en arrière du miroir convexe, d'un côté opposé à sa face réfléchissante.

Selon une première caractéristique supplémentaire de l'invention, le dispositif est adapté pour qu'une partie d'un rayonnement électromagnétique qui traverse l'ouverture du miroir concave en direction du miroir convexe, soit réfléchie par ce miroir convexe puis par le miroir concave, puis traverse le hublot, et se propage ensuite en arrière du miroir convexe.

Selon une seconde caractéristique supplémentaire de l'invention, le dispositif est adapté en outre pour qu'un fluide qui traverse l'ouverture du miroir concave en direction du miroir convexe, soit dévié devant ce miroir convexe en acquérant une composante de vitesse radiale divergente par rapport à l'axe optique, puis s'écoule entre le hublot et le miroir concave.

Grâce à l'utilisation du miroir convexe en tant que surface optique de composant qui est exposée en premier au fluide externe, c'est-à-dire exposée à de l'air pouvant être à vitesse élevée et contenir des particules denses en suspension, aucune contrainte de transparence spectrale n'est requise pour ce composant optique. Il est alors plus facile de sélectionner pour ce miroir convexe un matériau qui présente une résistance à l'abrasion et une résistance thermique suffisantes.

En particulier, une partie au moins du miroir convexe, qui est efficace pour réfléchir le rayonnement, peut être constituée par une portion solide de matériau homogène d'épaisseur supérieure à 0,5 mm (millimètre), voire supérieure à 1 mm. Autrement dit, le miroir convexe peut être au moins partiellement en un matériau massif.

Après avoir été réfléchi par les deux miroirs, le rayonnement traverse le hublot, si bien que d'autres composants optiques qui sont disposés en aval du hublot, par rapport au sens de propagation du rayonnement, ne sont pas exposés au flux du fluide externe. De plus, la face réfléchissante du miroir concave étant tournée à l'opposé de la direction d'arrivée du fluide externe vers l'ensemble de collecte, elle n'est pas soumise aux impacts des particules denses contenues dans ce fluide externe. Pour cette raison, le miroir concave n'est pas sujet à dégradation par abrasion de sa face réfléchissante.

Selon une troisième caractéristique supplémentaire de l'invention, les miroirs convexe et concave peuvent être adaptés et disposés de sorte qu'un rayonnement électromagnétique qui traverse l'ouverture du miroir concave parallèlement à l'axe optique, soit focalisé par l'ensemble optique de collecte en un point d'image qui est situé sur cet axe optique en arrière du miroir convexe. Autrement dit, l'ensemble de collecte de rayonnement de l'invention forme directement un système imageur. Aucun système imageur de reprise, ou de ré-imagerie, peut alors n'être utilisé en aval de l'ensemble optique de collecte par rapport au sens de propagation du rayonnement. Un gain de poids et une économie de fabrication en résultent.

Dans différentes configurations avantageuses et compatibles avec l'invention, l'au moins un hublot peut être réparti symétriquement autour de l'axe optique, ou peut comprendre plusieurs hublots qui sont répartis symétriquement autour de l'axe optique.

En outre, selon l'application du dispositif autodirecteur, les miroirs et le hublot peuvent être adaptés pour que l'ensemble optique de collecte soit efficace pour collecter du rayonnement électromagnétique ayant au moins une longueur d'onde comprise entre 2 µm (micromètre) et 2,5 µm, ou entre 3 µm et 5 µm, ou encore entre 8 µm et 14 µm.

Un deuxième aspect de l'invention propose un dispositif autodirecteur de guidage d'engin autopropulsé, qui comprend :
- un ensemble optique de collecte de rayonnement, qui est conforme au premier aspect de l'invention ;
- au moins un détecteur optique, agencé pour recevoir le rayonnement qui a traversé l'ouverture du miroir concave, a été réfléchi par le miroir convexe puis par le miroir concave, puis qui a traversé l'au moins un hublot ;
- une unité de contrôle, adaptée pour déterminer une direction de provenance du rayonnement tel qu'existant avant que ce rayonnement atteigne l'ensemble optique de collecte, à partir d'au moins un signal qui est délivré par le détecteur optique, et adaptée pour commander une orientation d'une vitesse de déplacement de l'engin en fonction de la direction déterminée pour la provenance du rayonnement ; et
- au moins une ouverture d'évacuation, agencée pour évacuer le fluide qui a traversé l'ouverture du miroir concave en direction du miroir convexe, et qui s'est écoulé entre le hublot et le miroir concave.

De préférence, l'ensemble optique de collecte et le détecteur optique peuvent être agencés et adaptés pour que le dispositif autodirecteur ait un champ optique d'entrée qui est large. En particulier, un demi-angle d'ouverture de ce champ optique d'entrée peut être supérieur à 10°, préférablement supérieur à 15°, encore plus préférablement supérieur à 18°.

Le détecteur optique peut être en particulier un détecteur à quatre quadrants, ou un détecteur de rayonnement qui est pourvu d'un masque rotatif à ouvertures. Mais ce peut être de préférence un capteur d'image matriciel qui est disposé dans un plan focal de formation d'image. Alors, lorsque l'ensemble optique de collecte produit lui-même la fonction de formation de l'image à saisir, le capteur d'image matriciel peut être disposé dans le plan focal de l'ensemble optique de collecte.

Enfin, un troisième aspect de l'invention propose un engin autopropulsé qui comprend un dispositif autodirecteur conforme au deuxième aspect de l'invention, et agencé pour guider automatiquement un déplacement de l'engin vers un point de provenance du rayonnement. Selon l'invention, l'engin comprend un passage d'évacuation agencé pour guider vers une sortie d'échappement de l'engin, le fluide qui provient de l'ouverture d'évacuation du dispositif autodirecteur, de sorte que le fluide possède, à la sortie d'échappement, une composante de vitesse qui est orientée dans le même sens qu'une vitesse du fluide à travers l'ouverture du miroir concave.

### Brève description des dessins

Les caractéristiques et avantages de la présente invention apparaîtront plus clairement dans la description détaillée ci-après d'exemples de réalisation non-limitatifs, en référence aux figures annexées parmi lesquelles :
- la figure 1 est une vue en coupe longitudinale d'un ensemble optique de collecte de rayonnement qui est conforme à l'invention ; et
- la figure 2 est une vue en coupe longitudinale d'un engin autopropulsé qui comprend l'ensemble optique de collecte de rayonnement de la figure 1.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

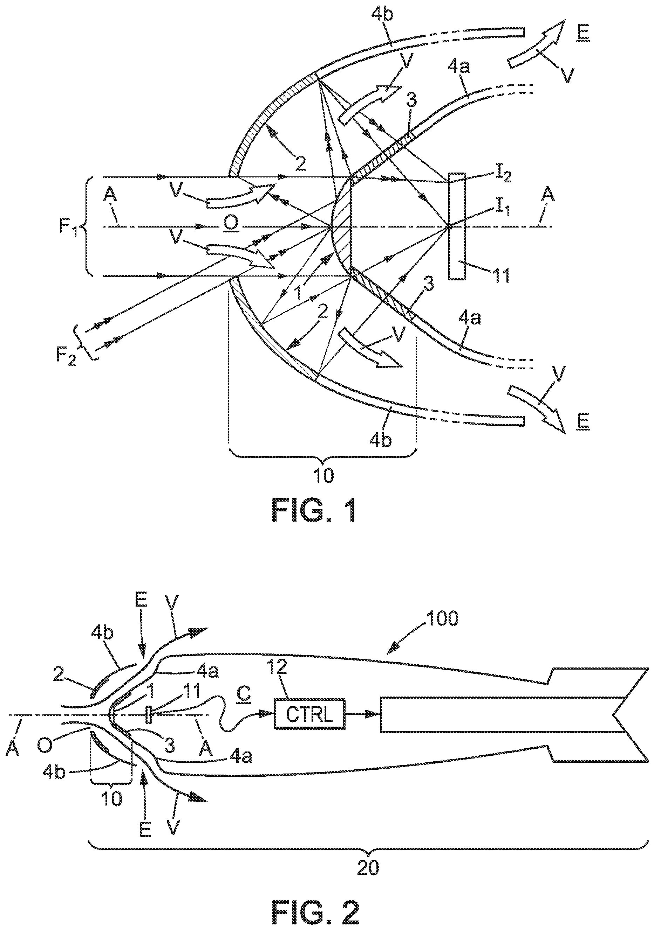

Conformément à la figure 1, un ensemble optique de collecte de rayonnement 10 comprend un miroir convexe 1 et un miroir concave 2 à ouverture centrale. L'ensemble optique 10 possède un axe optique A-A, qui est superposé à des axes respectifs du miroir concave 2, de son ouverture désignée par la référence O, et du miroir convexe 1. L'ensemble 10 qui est ainsi constitué possède un plan focal dans lequel il forme une image à partir d'un faisceau de rayons incidents qui traverse l'ouverture O du miroir concave 2, et qui est réfléchi ensuite par le miroir convexe 1 puis par le miroir concave 2. Lorsque le faisceau de rayons incidents possède une structure initiale de faisceau parallèle, avant de pénétrer à travers l'ouverture O, les rayons de ce faisceau convergent en un point du plan focal qui dépend de la direction de provenance du faisceau. Sur la figure 1, un premier faisceau F₁ est représenté, qui provient d'une direction parallèle à l'axe optique A-A, et qui converge au point I₁ du plan focal. Un second faisceau F₂ possède une direction de provenance inclinée par rapport à l'axe optique A-A, et converge au point I₂ du plan focal. Ainsi, l'endroit de convergence dans le plan focal de l'ensemble de collecte 10, d'un faisceau de rayonnement incident constitue une information représentative de la direction de provenance de ce faisceau. Un capteur d'image 11 peut alors être placé dans le plan focal, afin de convertir en coordonnées bidimensionnelles la direction de provenance de chaque faisceau de rayonnement qui traverse l'ouverture O du miroir concave 2.

Possiblement, une optique de ré-imagerie (non-représentée) peut être intermédiaire entre le miroir concave 2 et le capteur d'image 11, en arrière du miroir convexe 1. Toutefois, il peut être préférable pour certaines applications, pour raisons de poids et de coût à réduire, de ne pas utiliser de telle optique de ré-imagerie.

Le plan focal de l'ensemble optique 10 est perpendiculaire à l'axe optique A-A, et situé en arrière du miroir convexe 1, d'un côté de celui-ci qui est opposé à l'ouverture O du miroir concave 2. Le capteur d'image 11 se trouve donc aussi en arrière du miroir convexe 1. Ainsi, les rayons des faisceaux de rayonnement qui sont collectés par l'ensemble optique 10 recoupent un plan moyen du miroir convexe 1 à l'extérieur d'un bord périphérique de ce miroir convexe 1 après avoir été réfléchis par le miroir concave 2. Un hublot 3, par exemple en forme de tronc de cône à symétrie de révolution, peut être disposé autour du bord périphérique du miroir convexe 1, de façon à être traversé par les rayons des faisceaux collectés lorsqu'ils convergent vers le plan focal de l'ensemble de collecte 10. Le hublot 3 peut être connecté de façon étanche vers l'avant au bord périphérique du miroir convexe 1 au niveau de la petite extrémité du tronc de cône, et être connecté vers l'arrière encore de façon étanche à une paroi de chambre 4a. Ainsi, le capteur d'image 11, une électronique associée et d'autres composants peuvent être contenus dans une chambre C qui est fermée en amont par le miroir convexe 1 et le hublot 3.

Le hublot 3 est transparent dans une bande spectrale de sensibilité du capteur d'image 11, et les miroirs 1 et 2 sont sélectionnés pour présenter chacun un taux de réflexion élevé dans cette bande spectrale. Par exemple, cette bande spectrale peut s'étendre entre 2 µm et 2,5 µm, ou entre 3 µm et 5 µm, ou encore entre 8 µm et 14 µm, en termes de longueur d'onde du rayonnement à détecter. La bande spectrale entre 8 µm et 14 µm peut être adaptée pour détecter du rayonnement qui est produit par une source thermique. L'Homme du métier sait alors choisir un matériau pour le hublot 3, qui soit transparent pour la bande spectrale voulue. En particulier, lorsque l'ensemble de collecte 10 est voulu efficace pour des rayonnements électromagnétiques dont les longueurs d'onde sont comprises entre 8 µm et 12 µm, le hublot 3 peut être en séléniure de zinc (ZnSe), en sulfure de zinc (ZnS) ou en germanium (Ge), ou encore en matériau du type verre de chalcogénure, notamment le matériau GASIR^{®} produit par la Société Umicore.

Les miroirs 1 et 2 peuvent être en matériaux réfléchissants massifs, par exemple en métal poli, notamment en INOX. En particulier, le matériau à comportement réfléchissant pour le rayonnement, qui constitue la face optique de chaque miroir, peut avoir une épaisseur d'un demi à plusieurs millimètres. Alternativement, au moins le miroir concave 2 peut être constitué d'un empilement multicouche à fonction de miroir, possiblement protégé par une couche externe résistante à l'abrasion.

Un flux d'air, qui peut avoir une vitesse d'écoulement élevée, et qui traverse l'ouverture O du miroir concave 2 en direction du miroir convexe 1, est dévié latéralement par ce dernier, et réparti angulairement pour s'écouler entre le hublot 3 et le miroir concave 2. Eventuellement une paroi de carénage 4b peut être disposée dans la prolongation du miroir concave 2, à partir d'un bord périphérique externe de celui-ci, pour guider le flux d'air en aval du miroir concave 2. Ainsi, après s'être écoulé entre le hublot 3 et le miroir concave 2, le flux d'air s'écoule entre la paroi de chambre 4a et la paroi de carénage 4b jusqu'à une ouverture d'évacuation E. Le flux d'air est ainsi dévié radialement de façon centrifuge par le miroir convexe 1. Les flèches indiquées par des lettres V dans les figures indiquent un tel écoulement de flux d'air.

Des poussières ou gouttes d'eau présentes dans le flux d'air peuvent percuter la surface du miroir convexe 1. Toutefois, ce miroir convexe 1 pouvant être en matériau massif ou protégé par une couche dure, il peut être résistant par rapport à une abrasion de sa surface optique que provoqueraient ces poussières ou gouttes d'eau. Ainsi, même en étant exposé au flux d'air à haute vitesse, le miroir convexe 1 conserve une efficacité de réflexion optique pendant au moins toute une durée d'utilisation de l'ensemble optique de collecte 10.

Comme représenté sur la figure 2, l'ensemble optique de collecte 10 et le capteur d'image 11 peuvent être partie d'un dispositif autodirecteur 20 à bord d'un engin autopropulsé 100. L'optique de collecte 10 forme l'extrémité antérieure de l'engin 100, avec la face réfléchissante du miroir concave 2 qui est tournée vers l'arrière de l'engin 100. Une unité de contrôle 12, notée CTRL, du dispositif autodirecteur 20, ainsi que d'autres composants, peuvent être contenus dans la chambre C. Enfin, de façon connue, le dispositif autodirecteur 20 comprend encore d'autres éléments, non représentés, qui permettent de diriger l'engin autopropulsé 100 vers une cible d'où provient le rayonnement qui est collecté par l'ensemble optique 10 puis détecté par le capteur d'image 11. Le fonctionnement de guidage d'un tel dispositif autodirecteur étant connu de l'Homme du métier, il n'est pas nécessaire de le décrire à nouveau ici, au-delà du fonctionnement de l'ensemble de collecte 10 qui est proposé par l'invention.

En fonction de l'application de l'ensemble optique 10, et notamment pour l'application à un dispositif autodirecteur qui vient d'être décrite, l'Homme du métier saura dimensionner les miroirs 1 et 2 quant à leurs diamètres, le diamètre de l'ouverture O, les courbures respectives des deux miroirs et leurs espacements respectifs. En particulier, il pourra sélectionner ces paramètres en fonction d'un champ angulaire et d'une ouverture numérique désirés pour le système optique d'entrée du dispositif autodirecteur. Des valeurs de demi-angle d'ouverture de champ optique d'entrée qui sont supérieures à 10°, voire supérieures à 15° ou 18°, sont appropriées pour l'application de dispositif autodirecteur.

Possiblement, le dispositif autodirecteur 20 peut être conçu pour détecter du rayonnement électromagnétique simultanément dans plusieurs bandes spectrales, ou pour posséder plusieurs voies optiques distinctes de détection qui sont dédiées à des bandes spectrales différentes. Pour cela, des rayonnements qui sont collectés par l'ensemble 10 et transmis à travers le hublot 3, peuvent être dirigés vers des détecteurs optiques dédiés du dispositif 20, en fonction de bandes spectrales séparées auxquelles appartiennent ces rayonnements. Tous ces détecteurs optiques peuvent être contenus dans la chambre C, et être activés simultanément ou bien seulement un ou certains d'entre eux à l'exclusion des autres. L'Homme du métier connaît des méthodes de division de faisceau par séparation spectrale qui permettent de diriger simultanément vers plusieurs détecteurs optiques, plusieurs parties de rayonnement qui sont à détecter séparément par chacun des détecteurs optiques.

Possiblement encore, le carénage de l'engin autopropulsé 100 peut être conçu pour évacuer le flux d'air qui traverse l'ouverture O du miroir concave 2, de façon décalée vers l'arrière de l'engin 100. Dans ce cas, la paroi de chambre 4a et la paroi de carénage 4b peuvent être prolongées pour former, à partir de l'ouverture d'évacuation E, un passage d'évacuation intermédiaire entre ces parois 4a et 4b, jusqu'à une sortie d'échappement qui est située plus vers l'arrière de l'engin 100. Une stabilité supérieure dans le guidage de l'engin 100 peut être obtenue de cette façon. De façon générale, pour perturber au minimum la propulsion de l'engin 100, il est avantageux que le flux d'air qui est évacué après avoir traversé l'ensemble de collecte de rayonnement 10, soit libéré à partir de l'engin 100 avec une composante de vitesse selon l'axe A-A qui est dans le même sens que la pénétration de ce flux dans l'ouverture O du miroir concave 2.

Il est entendu que l'invention peut être reproduite en modifiant des aspects secondaires des modes de réalisation qui ont été décrits en détail ci-dessus, tout en conservant certains au moins des avantages cités. Notamment, le hublot 3 peut être divisé en plusieurs hublots élémentaires qui sont répartis autour du miroir convexe 1. De même, séparément ou en combinaison, le passage du flux d'air entre le hublot 3 et le miroir concave 2 peut aussi être divisé, dans ce cas en plusieurs veines d'écoulement. En outre, toutes les valeurs numériques qui ont été citées ne l'ont été qu'à titre d'illustration, et peuvent être changées en fonction de l'application considérée.

## Revendications

1. Ensemble optique (10) de collecte de rayonnement, adapté pour former une entrée optique d'un dispositif autodirecteur de guidage d'engin autopropulsé, ledit ensemble optique de collecte comprenant :
- un miroir convexe (1), qui possède une face réfléchissante et un axe optique (A-A) ;
- un miroir concave (2), qui est disposé en avant de la face réfléchissante du miroir convexe (1) et tourné vers ledit miroir convexe, le miroir concave étant pourvu d'une ouverture (O) à travers une partie centrale dudit miroir concave, les miroirs concave et convexe ayant le même axe optique (A-A), et ledit axe optique traversant l'ouverture du miroir concave en un point central de ladite ouverture ; et
- au moins un hublot (3) qui est transparent pour le rayonnement, et qui s'étend en arrière du miroir convexe (1), d'un côté opposé à la face réfléchissante dudit miroir convexe,
l'ensemble étant adapté pour qu'une partie d'un rayonnement électromagnétique qui traverse l'ouverture (O) du miroir concave (2) en direction du miroir convexe (1) soit réfléchie par ledit miroir convexe puis par le miroir concave, puis traverse le hublot (3), et se propage ensuite en arrière du miroir convexe,
et étant adapté en outre pour qu'un fluide qui traverse l'ouverture (O) du miroir concave (2) en direction du miroir convexe (1) soit dévié devant ledit miroir convexe en acquérant une composante de vitesse radiale divergente par rapport à l'axe optique (A-A), puis s'écoule entre le hublot (3) et le miroir concave,
les miroirs convexe (1) et concave (2) étant adaptés et disposés de sorte qu'un rayonnement électromagnétique (F₁) qui traverse l'ouverture (O) du miroir concave parallèlement à l'axe optique (A-A), soit focalisé par l'ensemble optique de collecte en un point d'image (I₁) qui est situé sur ledit axe optique en arrière du miroir convexe.

2. Ensemble optique (10) selon la revendication 1, dans lequel une partie au moins du miroir convexe (1), qui est efficace pour réfléchir le rayonnement, est constituée par une portion solide de matériau homogène d'épaisseur supérieure à 0,5 mm, voire supérieure à 1 mm.

3. Ensemble optique (10) selon l'une quelconque des revendications précédentes, dans lequel ledit au moins un hublot (3) est réparti symétriquement autour de l'axe optique (A-A), ou comprend plusieurs hublots qui sont répartis symétriquement autour de l'axe optique.

4. Ensemble optique (10) selon l'une quelconque des revendications précédentes, dans lequel les miroirs (1, 2) et le hublot (3) sont adaptés pour que ledit ensemble optique soit efficace pour collecter du rayonnement électromagnétique ayant au moins une longueur d'onde comprise entre 2 µm et 2,5 µm, ou entre 3 µm et 5 µm, ou encore entre 8 µm et 14 µm.

5. Dispositif autodirecteur (20) de guidage d'engin autopropulsé (100), comprenant :
- un ensemble optique (10) de collecte de rayonnement, qui est conforme à l'une quelconque des revendications précédentes ;
- au moins un détecteur optique (11), agencé pour recevoir le rayonnement qui a traversé l'ouverture (O) du miroir concave (2), a été réfléchi par le miroir convexe (1) puis par le miroir concave, puis qui a traversé ledit au moins un hublot (3) ;
- une unité de contrôle (12), adaptée pour déterminer une direction de provenance du rayonnement tel qu'existant avant que ledit rayonnement atteigne l'ensemble optique (10) de collecte, à partir d'au moins un signal qui est délivré par le détecteur optique (11), et adaptée pour commander une orientation d'une vitesse de déplacement de l'engin (100) en fonction de la direction déterminée pour la provenance du rayonnement ; et
- au moins une ouverture d'évacuation (E), agencée pour évacuer le fluide qui a traversé l'ouverture (O) du miroir concave (2) en direction du miroir convexe (1), et qui s'est écoulé entre le hublot (3) et le miroir concave.

6. Dispositif autodirecteur (20) selon la revendication 5, dans lequel l'ensemble optique (10) de collecte et le détecteur optique (11) sont agencés et adaptés pour que ledit dispositif autodirecteur ait un demi-angle d'ouverture de champ optique d'entrée qui est supérieur à 10°, préférablement supérieur à 15°, encore plus préférablement supérieur à 18°.

7. Dispositif autodirecteur (20) selon la revendication 5 ou 6, dans lequel le détecteur optique (11) est un capteur d'image matriciel qui est disposé dans un plan focal de formation d'image.

8. Dispositif autodirecteur (20) selon la revendication 7, dans lequel le capteur d'image matriciel (11) est disposé dans un plan focal dudit ensemble optique de collecte.

9. Engin autopropulsé (100), comprenant un dispositif autodirecteur (20) qui est conforme à l'une quelconque des revendications 5 à 8, et qui est agencé pour guider automatiquement un déplacement de l'engin vers un point de provenance du rayonnement, ledit engin comprenant un passage d'évacuation agencé pour guider vers une sortie d'échappement de l'engin, le fluide qui provient de l'ouverture d'évacuation (E) du dispositif autodirecteur, de sorte que ledit fluide possède, à la sortie d'échappement, une composante de vitesse qui est orientée dans le même sens qu'une vitesse du fluide à travers l'ouverture (O) du miroir concave (2).

## Patentansprüche

1. Optische Strahlungssammelanordnung (10), die dazu ausgelegt ist, einen optischen Eingang einer Zielsuchvorrichtung zur Lenkung eines selbstangetriebenen Flugkörpers zu bilden, wobei die optische Strahlungssammelanordnung enthält:
- einen konvexen Spiegel (1), der eine reflektierende Seite und eine optische Achse (A-A) aufweist;
- einen konkaven Spiegel (2), der vor der reflektierenden Seite des konvexen Spiegels (1) angeordnet und dem konvexen Spiegel zugewandt ist, wobei der konkave Spiegel mit einer Öffnung (O) durch einen zentralen Teil des konkaven Spiegels versehen ist, wobei der konkave und der konvexe Spiegel dieselbe optische Achse (A-A) aufweisen und die optische Achse die Öffnung des konkaven Spiegels an einem zentralen Punkt der Öffnung durchquert; und
- zumindest ein Sichtfenster (3), das für Strahlung durchlässig ist und sich hinter dem konvexen Spiegel (1) auf einer Seite erstreckt, die der reflektierenden Seite des konvexen Spiegels gegenüberliegt,
wobei die Anordnung dazu ausgelegt ist, dass ein Teil einer elektromagnetischen Strahlung, die durch die Öffnung (O) des konkaven Spiegels (2) in Richtung des konvexen Spiegels (1) hindurchgeht, von dem konvexen Spiegel und dann von dem konkaven Spiegel reflektiert wird, dann durch das Sichtfenster (3) hindurchgeht und sich schließlich hinter dem konvexen Spiegel ausbreitet,
und ferner dazu ausgelegt ist, dass ein Fluid, das durch die Öffnung (O) des konkaven Spiegels (2) in Richtung des konvexen Spiegels (1) strömt, vor dem konvexen Spiegel abgelenkt wird, indem es eine bezüglich der optischen Achse (A-A) divergente radiale Geschwindigkeitskomponente erlangt, und dann zwischen dem Sichtfenster (3) und dem konkaven Spiegel strömt,
wobei der konvexe (1) und der konkave (2) Spiegel so ausgelegt und angeordnet sind, dass eine elektromagnetische Strahlung (F₁), die durch die Öffnung (O) des konkaven Spiegels parallel zur optischen Achse (A-A) tritt, von der optischen Sammelanordnung auf einen Bildpunkt (I₁) fokussiert wird, der sich auf der optischen Achse hinter dem konvexen Spiegel befindet.

2. Optische Anordnung (10) nach Anspruch 1,
wobei zumindest ein Teil des konvexen Spiegels (1) zum Reflektieren der Strahlung aus einem festen Abschnitt aus homogenem Material mit einer Dicke von mehr als 0,5 mm bzw. mehr als 1 mm besteht.

3. Optische Anordnung (10) nach einem der vorhergehenden Ansprüche,
wobei das zumindest eine Sichtfenster (3) symmetrisch um die optische Achse (A-A) verteilt angeordnet ist oder mehrere Sichtfenster umfasst, die symmetrisch um die optische Achse verteilt angeordnet sind.

4. Optische Anordnung (10) nach einem der vorhergehenden Ansprüche,
wobei die Spiegel (1, 2) und das Sichtfenster (3) so ausgelegt sind, dass die optische Anordnung dazu geeignet ist, elektromagnetische Strahlung mit zumindest einer Wellenlänge zwischen 2 µm und 2,5 µm bzw. zwischen 3 µm und 5 µm bzw. zwischen 8 µm und 14 µm zu sammeln.

5. Zielsuchvorrichtung (20) zum Lenken eines selbstangetriebenen Flugkörpers (100), enthaltend:
- eine optische Strahlungssammelanordnung (10) nach einem der vorhergehenden Ansprüche;
- zumindest einen optischen Detektor (11), der dazu angeordnet ist, Strahlung zu empfangen, die durch die Öffnung (O) des konkaven Spiegels (2) hindurchgetreten ist, vom konvexen Spiegel (1) und dann vom konkaven Spiegel reflektiert wurde und dann durch das zumindest eine Sichtfenster (3) hindurchgetreten ist;
- eine Steuereinheit (12), die dazu ausgelegt ist, eine Herkunftsrichtung der Strahlung, wie sie vor dem Erreichen der optischen Sammelanordnung (10) besteht, anhand zumindest eines Signals zu bestimmen, das von dem optischen Detektor (11) ausgegeben wird, und die dazu ausgelegt ist, eine Orientierung einer Bewegungsgeschwindigkeit des Flugkörpers (100) in Abhängigkeit von der bestimmten Herkunftsrichtung der Strahlung zu steuern; und
- zumindest eine Auslassöffnung (E), die dazu angeordnet ist, das Fluid, das durch die Öffnung (O) des konkaven Spiegels (2) in Richtung des konvexen Spiegels (1) hindurchgetreten ist und das zwischen dem Sichtfenster (3) und dem konkaven Spiegel geströmt ist, auszulassen.

6. Zielsuchvorrichtung (20) nach Anspruch 5,
wobei die optische Sammelanordnung (10) und der optische Detektor (11) so angeordnet und ausgelegt sind, dass die Zielsuchvorrichtung einen halben Öffnungswinkel des optischen Eingangsfeldes aufweist, der größer als 10°, vorzugsweise größer als 15°, noch bevorzugter größer als 18° ist.

7. Zielsuchvorrichtung (20) nach Anspruch 5 oder 6,
wobei der optische Detektor (11) ein Matrixbildsensor ist, der in einer bildgebenden Fokalebene angeordnet ist.

8. Zielsuchvorrichtung (20) nach Anspruch 7,
wobei der Matrixbildsensor (11) in einer Fokalebene der optischen Sammelanordnung angeordnet ist.

9. Selbstangetriebener Flugkörper (100), enthaltend eine Zielsuchvorrichtung (20) nach einem der Ansprüche 5 bis 8, die dazu angeordnet ist, eine Bewegung des Flugkörpers automatisch zu einem Punkt zu lenken, von dem die Strahlung ausgeht, wobei der Flugkörper einen Auslassdurchgang umfasst, der dazu angeordnet ist, das von der Auslassöffnung (E) der Zielsuchvorrichtung stammende Fluid zu einem Ableitauslass des Flugkörpers zu führen, so dass das Fluid an dem Ableitauslass eine Geschwindigkeitskomponente hat, die in die gleiche Richtung wie eine Geschwindigkeit des Fluids durch die Öffnung (O) des konkaven Spiegels (2) gerichtet ist.

## Claims

1. A radiation-collecting optical assembly (10) designed to form an optical entrance of a seeking device for guiding a self-propelled machine, said collecting optical assembly comprising:
- a convex mirror (1), which has a reflecting face and an optical axis (A-A);
- a concave mirror (2), which is placed in front of the reflecting face of the convex mirror (1) and facing said convex mirror, the concave mirror being provided with an aperture (O) through a central portion of said concave mirror, the concave and convex mirrors having same optical axis (A-A), and said optical axis passing through the aperture of the concave mirror at a central point of said aperture; and
- at least one window (3) that is transparent to the radiation, and that extends behind the convex mirror (1), on a side opposite the reflecting face of said convex mirror,
the assembly being designed so that part of an electromagnetic radiation that passes through the aperture (O) of the concave mirror (2) in direction of the convex mirror (1) is reflected by said convex mirror then by the concave mirror, then passes through the window (3), and then propagates behind the convex mirror,
and being further designed so that a fluid that passes through the aperture (O) of the concave mirror (2) in direction of the convex mirror (1) is deviated in front of said convex mirror, thereby acquiring a radial velocity component that is divergent with respect to the optical axis (A-A), and then flows between the window (3) and the concave mirror,
the convex and concave mirrors (1, 2) being designed and placed so that electromagnetic radiation (F₁) that passes through the aperture (O) of the concave mirror parallel to the optical axis (A-A) is focused by the collecting optical assembly on an image point (I₁) that is located on said optical axis behind the convex mirror.

2. The optical assembly (10) as claimed in claim 1, wherein at least one portion of the convex mirror (1), which is efficient for reflecting the radiation, is comprised of a solid portion of uniform material with a thickness larger than 0.5 mm, or even larger than 1 mm.

3. The optical assembly (10) as claimed in any one of the preceding claims, wherein said at least one window (3) is symmetrically distributed about the optical axis (A-A), or comprises a plurality of windows that are symmetrically distributed about the optical axis.

4. The optical assembly (10) as claimed in any one of the preceding claims, wherein the mirrors (1, 2) and the window (3) are designed so that said optical assembly is efficient for collecting electromagnetic radiation having at least one wavelength comprised between 2 µm and 2.5 µm, or between 3 µm and 5 µm, or even between 8 µm and 14 µm.

5. A seeking device (20) for guiding a self-propelled machine (100), said device comprising:
- a radiation-collecting optical assembly (10) as claimed in any one of the preceding claims;
- at least one optical detector (11), which is arranged to receive the radiation that has passed through the aperture (O) of the concave mirror (2), that has been reflected by the convex mirror (1) then by the concave mirror, and that has passed then through said at least one window (3);
- a control unit (12), said control unit being designed to determine a direction of origin of the radiation as existing before said radiation reaches the collecting optical assembly (10), based on at least one signal that is outputted by the optical detector (11), and designed to control an orientation of a travel speed of the machine (100) depending on the direction determined for the origin of the radiation; and
- at least one evacuation aperture (E), said evacuation aperture being arranged to evacuate the fluid that has passed through the aperture (O) of the concave mirror (2) in direction of the convex mirror (1), and that has flowed between the window (3) and the concave mirror.

6. The seeking device (20) as claimed in claim 5, wherein the collecting optical assembly (10) and the optical detector (11) are arranged and designed so that said seeking device has an apex half-angle of an entrance optical field that is larger than 10°, preferably larger than 15°, and even more preferably larger than 18°.

7. The seeking device (20) as claimed in claim 5 or 6, wherein the optical detector (11) is a matrix-array image sensor that is placed in an imaging focal plane.

8. The seeking device (20) as claimed in claim 7, wherein the matrix-array image sensor (11) is placed in a focal plane of said collecting optical assembly.

9. A self-propelled machine (100), comprising a seeking device (20) that is as claimed in any one of claims 5 to 8, and that is arranged to automatically guide a travel of the machine toward a point of origin of the radiation, said machine comprising an evacuation passage arranged to guide, toward an exhaust outlet of the machine, fluid coming from the evacuation aperture (E) of the seeking device, so that said fluid has, at the exhaust outlet, a velocity component that is oriented in a same direction as a velocity of the fluid through the aperture (O) of the concave mirror (2).
